# EUROPEAN PATENT SPECIFICATION

(11) **EP 2 848 522 B1**
(45) Date of publication and mention of the grant of the patent: **30.09.2020**
(21) Application number: 14171323.0
(22) Date of filing: 05.06.2014
(51) Int. Cl.: B64C 23/06, B64G 1/00, B64G 1/66

(54) **Unsteady aerodynamics mitigation for multi-body aerospace apparatus**
Minderung instationärer Aerodynamik für Mehrkörper-Raumfahrvorrichtung
Atténuation d'aérodynamisme non stationnaire pour appareil aérospatial multicorps

(30) Priority: 19.08.2013 US 201313970141
(43) Date of publication of application: 18.03.2015
(73) Proprietor: The Boeing Company, Chicago, IL 60606-1596 (US)
(72) Inventor: Fricker, Darren Alec, Fountain Valley, CA 92708 (US); Bowcutt, Kevin G., Aliso Viejo, CA 92656 (US)
(74) Representative: Plasseraud IP

(56) References cited:
- WO-A2-01/64509
- JP-A- S63 207 796
- US-A- 4 452 412
- US-A- 4 834 324
- US-A- 5 117 758
- US-A1- 2010 038 492

## Description

This disclosure relates to creating a uniform and steady airflow in multi-body aerospace apparatus.

Multi-body aerospace apparatus, such as aircraft, space-shuttles, vehicles, or other types of multi-body aerospace apparatus typically experience unsteady airflow in the areas between the multiple bodies of the multi-body aerospace apparatus. This unsteady airflow load may create stability, load, and control issues for the multi-body aerospace apparatus. To address this issue, multi-body aerospace apparatus are typically made stronger which increases weight and cost.

Multi-body aerospace apparatus and methods for their use are needed to address one or more of the issues associated with one or more of the current multi-body aerospace apparatus.

According to US-5,117,758, in response to an abort command, fragmentation of a propellant booster rocket carried on a missile is limited by positioning of annular shaped charges at axially spaced locations on the outer shell of the booster rocket. Detonation of the charges thereby severs an intermediate section of the rocket from forward and aft sections which remain attached to the missile. The intermediate section is separated from the missile by such severing action to prevent further fragmenting forces from being imparted thereto.

In one embodiment, a multi-body aerospace apparatus according to claim 1 is disclosed.

In still another embodiment, a method of using a multi-body aerospace apparatus according to claim 7 is disclosed.

Further embodiments are defined by the dependent claims.

The scope of the present disclosure is defined solely by the appended claims and is not affected by the statements within this summary.

The disclosure can be better understood with reference to the following drawings and description. The components in the figures are not necessarily to scale, emphasis instead being placed upon illustrating the principles of the disclosure.
Figure 1 illustrates a perspective view of a multi-body aerospace apparatus;
Figure 2 illustrates a side-view of a portion of the multi-body aerospace apparatus of Figure 1;
Figure 3 illustrates the unsteady airflow which is produced at one point in time as a multi-aerospace apparatus without a flow separation member flies through the atmosphere;
Figure 4 illustrates the steady airflow which is produced at one point in time as a multi-aerospace apparatus having a flow separation member flies through the atmosphere;
Figure 5 illustrates a perspective view of another multi-body aerospace apparatus;
Figure 6 illustrates a side-view of a portion of the multi-body aerospace apparatus of Figure 5;
Figure 7 illustrates a perspective view of a multi-body aerospace apparatus;
Figure 8 illustrates a side-view of a portion of the multi-body aerospace apparatus of Figure 7; and
Figure 9 is a flowchart illustrating a method of using a multi-body aerospace apparatus.

### DETAILED DESCRIPTION

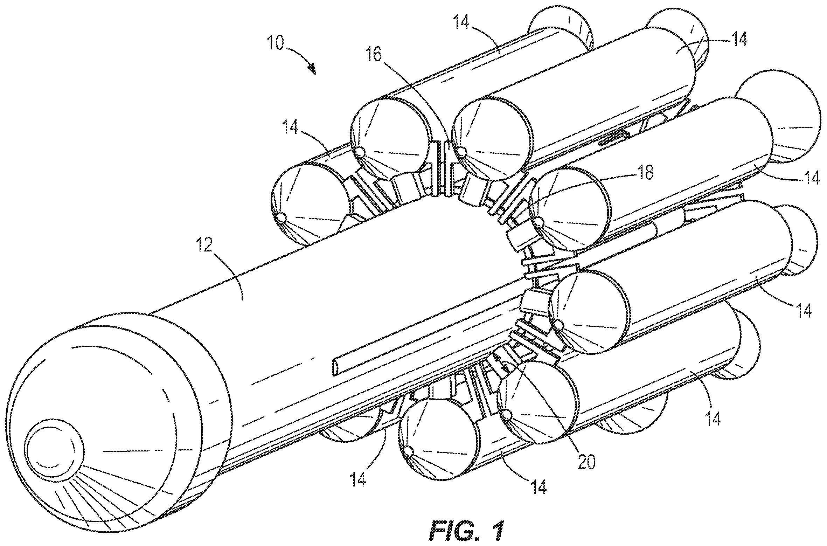

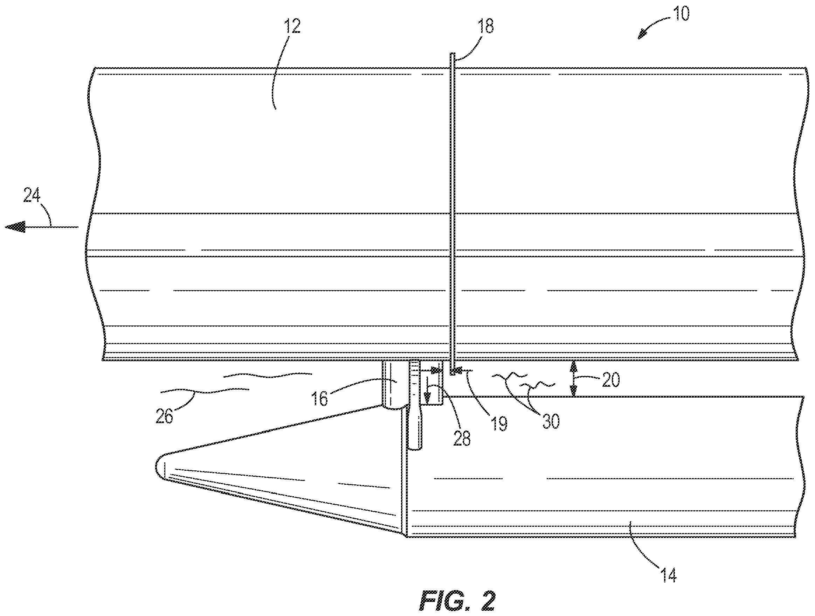

Figure 1 illustrates a perspective view of a multi-body aerospace apparatus 10. The multi-body aerospace apparatus 10 may comprise any type of multi-body aerospace apparatus 10 for flying through the atmosphere such as an aircraft, a space shuttle, a vehicle, or another type of multi-body aerospace apparatus. The multi-body aerospace apparatus 10 comprises a first aerospace body 12, a second aerospace body 14, an attachment member 16, and a flow separation member 18. The first aerospace body 12 comprises a core body and the second aerospace body 14 may be considered a booster rocket. In this regard, the aerospace apparatus 10 shown in Figure 1 includes nine second aerospace bodies 14, e.g., nine booster rockets, with one of the nine second aerospace bodies 14 hidden from view. The first aerospace body 12 and the second aerospace body 14 may comprise varying numbers and types of aerospace bodies. The attachment member 16 attaches the first aerospace body 12 adjacent to the second aerospace body 14 with a gap 20 disposed between the first aerospace body 12 and the second aerospace body 14. The attachment member 16 may be attached to the first aerospace body 12 and to the second aerospace body 14 with any type of attachment mechanism such as fasteners, snap-fits, or other attachment members. The flow separation member 18 is attached to the first aerospace body 12 downstream of the attachment member 16. In this regard, downstream refers to a position that is away from the most forward portion of the multi-body aerospace vehicle 10 as the vehicle flies or travels through the atmosphere in direction 24 shown in Figure 2. In other examples in which the attachment member 16 is located towards a back or downstream end of the first aerospace body 12, the flow separation member 18 may be attached to the first aerospace body 12 upstream of the attachment member 16.

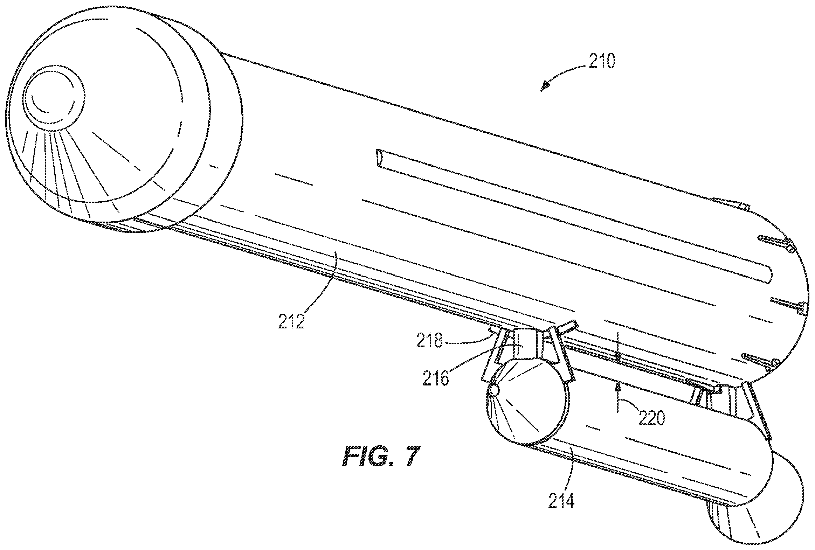

Figure 2 illustrates a side-view of a portion of the multi-body aerospace apparatus 10 of Figure 1 showing only one of the second aerospace bodies 14 to better illustrate the flow separation member 18. The flow separation member 18 comprises a ring extending completely around the first aerospace body 12. Alternatively, the flow separation member 18 may include one or more separate portions that form a segmented ring that extends completely around the first aerospace body 12 (see for example the single flow separation member of Figure 7 that may form one such segmented portion). The flow separation member 18 may be made of metal or varying materials. The flow separation member 18 may be attached to the first aerospace body 12 with any type of attachment mechanism such as fasteners, snap-fits, or other attachment members. The flow separation member 18 is disposed apart by a distance 19 from the attachment member 16. The flow separation member 18 extends in a direction away from the first aerospace body 12 and partway into the gap 20. The flow separation member 18 may comprise varying materials, shapes, sizes, and configurations. As the multi-body aerospace apparatus 10 travels in direction 24, air 26 traveling downstream first comes in contact with the attachment member 16 and then comes in contact with the flow separation member 18. The flow separation member 18 lifts the air 26 near the core body in direction 28 off the first aerospace body 12 into the gap 20 between the first aerospace body 12 and the second aerospace body 14. This lifting of the air 26 in direction 28, due to the flow separation member 18, off the first aerospace body 12 into the gap 20 produces a uniform and steady airflow 30 between the first aerospace body 12 and the second aerospace body 14. The flow separation member 18 may be disposed against the attachment member 16. The flow separation member 18 may comprise an integral portion of the attachment member 16.

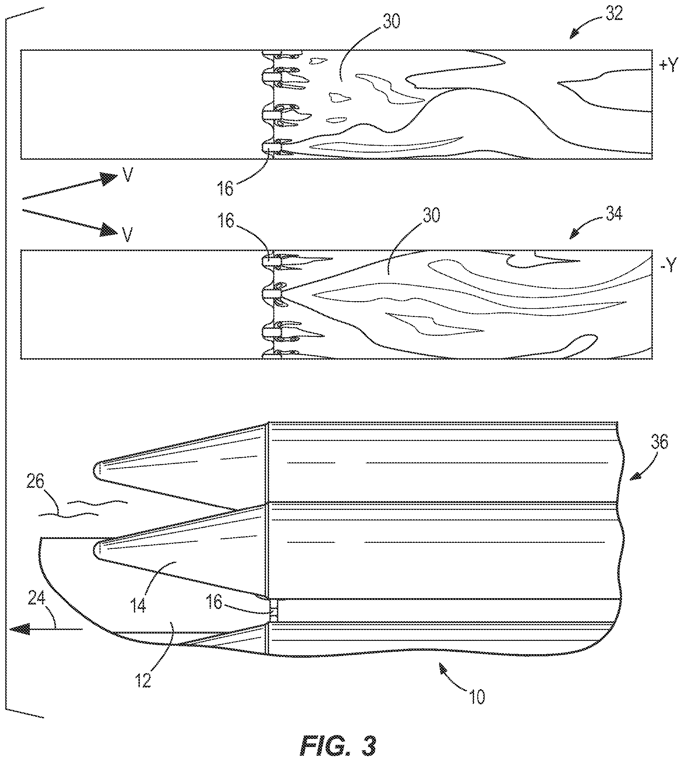

Figure 3 illustrates the unsteady airflow 30 which is produced at one point in time as a multi-aerospace apparatus 10 without the flow separation member flies in direction 24 through the atmosphere 26. Airflow chart 32 shows the unsteady airflow in the +Y vector and airflow chart 34 shows the unsteady airflow in the -Y vector with both unsteady airflow charts 32 and 34 aligned with the portion of the multi-aerospace apparatus 10 shown in representation 36. The attachment member 16 attaching the first aerospace body 12 to the second aerospace body 14 is shown in each of airflow charts 32 and 34 and in representation 36. As shown in unsteady airflow charts 32 and 34, when the multi-aerospace apparatus 10 does not contain the flow separation member unsteady airflow 30 is produced downstream of the attachment member 16. This unsteady airflow 30 makes it difficult to control flight of the multi-aerospace apparatus 10, creates loads on the multi-aerospace apparatus 10, or creates stability issues. As a result, without the flow separation member the multi-aerospace apparatus 10 has to be made stronger to handle the unsteady airflow 30 which adds weight and cost to the manufacture of the multi-aerospace apparatus 10. It is noted that unsteady airflow 30 is typically most severe in the transonic flow regime which is approximately 0.7 free stream Mach number 1.2.

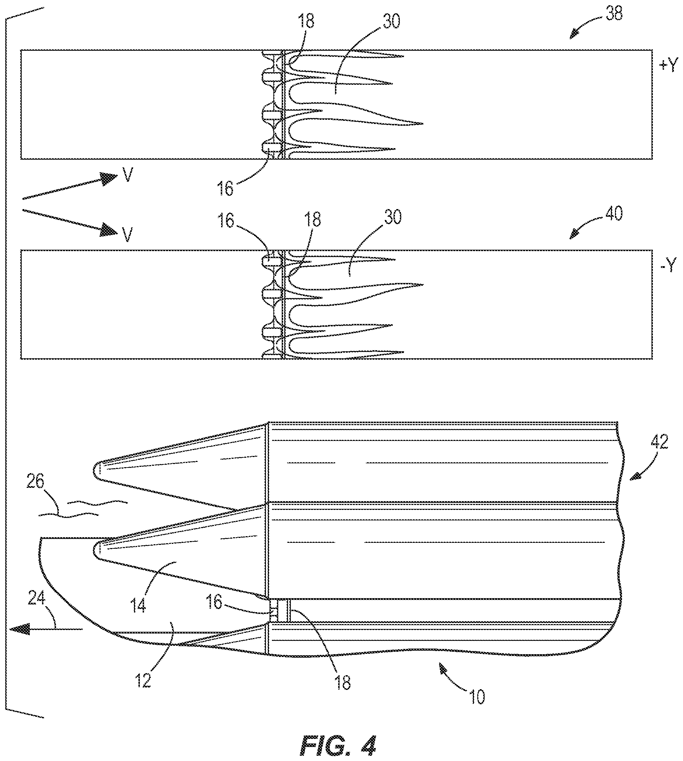

Figure 4 illustrates the steady airflow 30 which is produced at one point in time as a multi-aerospace apparatus 10 having the flow separation member 18 flies in direction 24 through the atmosphere 26. Airflow chart 38 shows the steady airflow in the +Y vector and airflow chart 40 shows the steady airflow in the -Y vector with both steady airflow charts 38 and 40 aligned with the portion of the multi-aerospace apparatus 10 shown in representation 42. The attachment member 16 attaching the first aerospace body 12 to the second aerospace body 14 is shown in each of airflow charts 38 and 40 and in representation 42. As shown in steady airflow charts 38 and 40, when the multi-aerospace apparatus 10 includes the flow separation member 18 steady airflow 30 is produced downstream of the attachment member 16. This steady airflow 30 makes it relatively easier to control flight of the multi-aerospace apparatus 10 and reduces the loads on the multi-aerospace apparatus 10 when compared to the multi-aerospace apparatus without the flow separation member 18. As a result, due to the flow separation member 18 the multi-aerospace apparatus 10 can be made lighter with substantially the same performance characteristics which reduces weight and cost to the manufacture of the multi-aerospace apparatus 10.

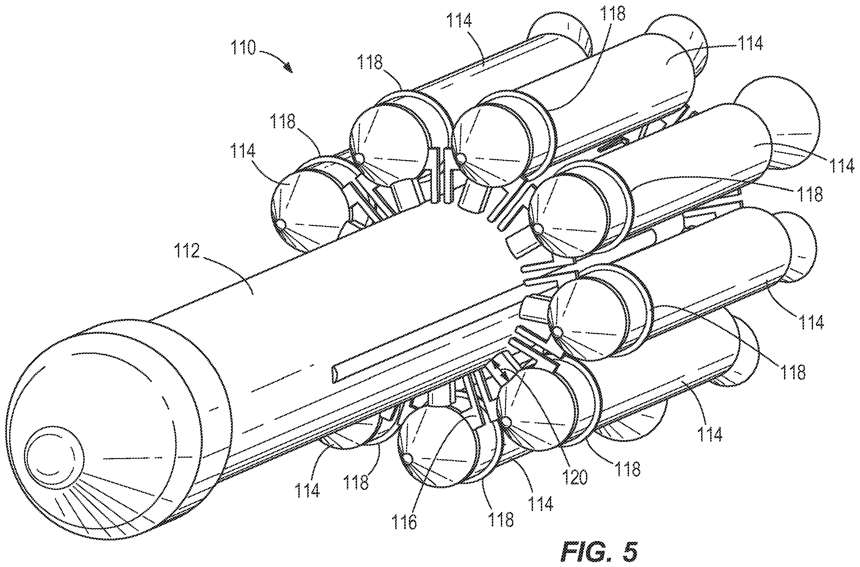

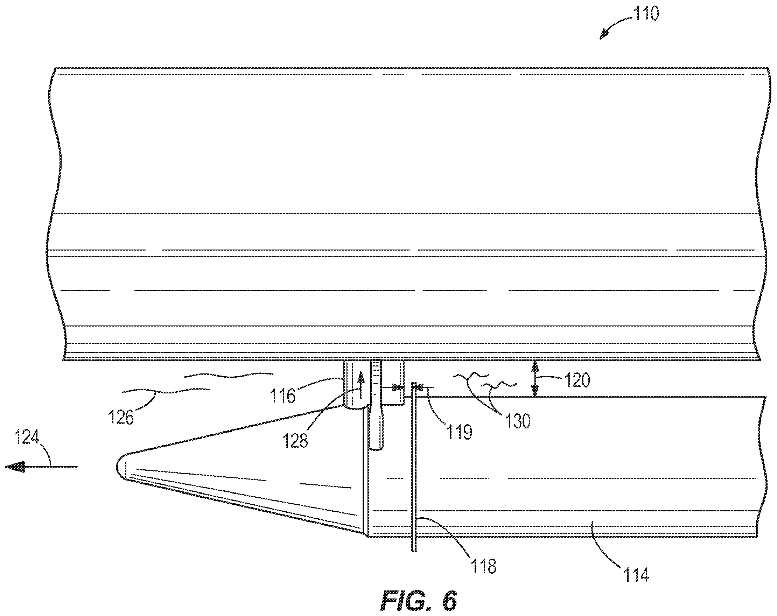

Figure 5 illustrates a perspective view of another multi-body aerospace apparatus 110. The multi-body aerospace apparatus 110 may comprise any type of multi-body aerospace apparatus 110 for flying or traveling through the atmosphere. The multi-body aerospace apparatus 110 comprises a first aerospace body 112, a second aerospace body 114, an attachment member 116, and a flow separation member 118. The first aerospace body 112 comprises a core body. The second aerospace body 114 may be considered a booster rocket. In this regard, the aerospace apparatus 110 shown in Figure 5 includes nine second aerospace bodies 114, e.g., nine booster rockets with one of the nine second aerospace bodies 114 hidden from view. The first aerospace body 112 and the second aerospace body 114 may comprise varying numbers and types of aerospace bodies. The attachment member 116 attaches the first aerospace body 112 adjacent to the second aerospace body 114 with a gap 120 disposed between the first aerospace body 112 and the second aerospace body 114. The attachment member 116 may be attached to the first aerospace body 112 and to the second aerospace body 114 with any type of attachment mechanism such as fasteners, snap-fits, or other attachment members. The flow separation member 118 is attached to the second aerospace body 114 downstream of the attachment member 116. In this regard, downstream refers to a position that is away from the most forward portion of the multi-body aerospace vehicle 110 as the vehicle flies or travels through the atmosphere in direction 124 shown in Figure 6. In other examples in which the attachment member 116 is located towards a back end of the first aerospace body 112, the flow separation member 118 may be attached to the second aerospace body 114 upstream of the attachment member 116.

Figure 6 illustrates a side-view of a portion of the multi-body aerospace apparatus 110 of Figure 5 showing only one of the second aerospace body 114 to better illustrate the flow separation member 118. The flow separation member 118 comprises a ring extending around the second aerospace body 114. It is noted, as shown in Figure 5, that each of the nine second aerospace bodies 114 include a separate ring comprising the flow separation member 118 extending completely around the corresponding second aerospace body 114. The flow separation member 118 may extend partially around the second aerospace body 114 to extend into the gap 120 disposed between the first aerospace body 112 and the second aerospace body 114. The following description related to flow separation member 118 attached to the one rocket booster shown in Figure 6 applies identically to each of the flow separation members 118 attached to the remaining eight rocket boosters shown in Figure 5.

The flow separation member 118 may be made of metal or varying materials. The flow separation member 118 may be attached to the second aerospace body 114 with any type of attachment mechanism such as fasteners, snap-fits, or other attachment members. The flow separation member 118 is disposed apart by a distance 119 from the attachment member 116. The flow separation member 118 extends in a direction away from the second aerospace body 114 and partway into the gap 120. The flow separation member 118 may comprise varying materials, shapes, sizes, and configurations. As the multi-body aerospace apparatus 110 travels in direction 124, air 126 traveling downstream first comes in contact with the attachment member 116 and then comes in contact with the flow separation member 118. The flow separation member 118 lifts the air 126 in direction 128 off the second aerospace body 114 toward the first aerospace body 112 and into the gap 120 between the first aerospace body 112 and the second aerospace body 114.

This lifting of the air 126 in direction 128, due to the flow separation member 118, off the second aerospace body 114 into the gap 120 produces a uniform and steady airflow 130 between the first aerospace body 112 and the second aerospace body 114. As shown in Figure 5, since each of the second aerospace bodies 114 contain a corresponding separate flow separation members 118, uniform and steady airflow 130 (shown in Figure 6) is created between each of the second aerospace bodies 114 and the first aerospace body 112 creating a symmetric, uniform, steady airflow around the multi-body aerospace apparatus 110. The flow separation member 118 may be disposed against the attachment member 116. The flow separation member 118 may comprise an integral portion of the attachment member 116.

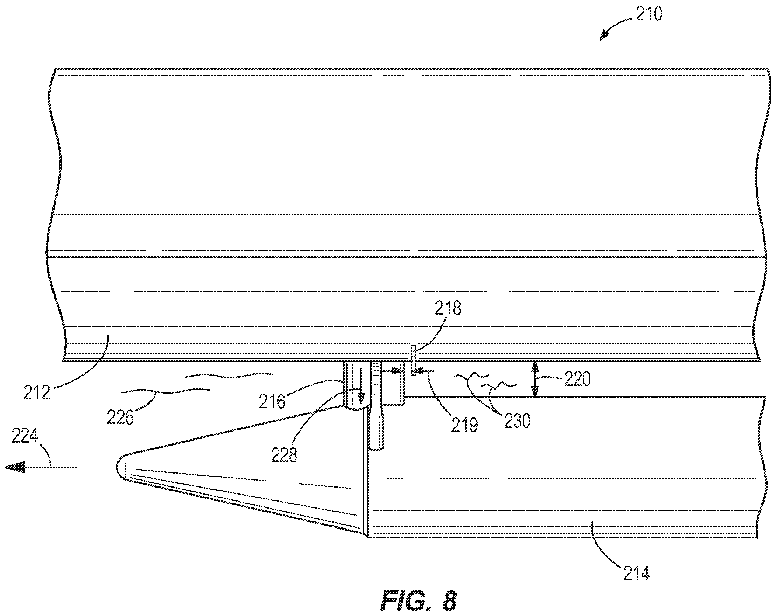

Figure 7 illustrates a perspective view of a multi-body aerospace apparatus 210. The multi-body aerospace apparatus 210 may comprise any type of multi-body aerospace apparatus 210 for flying or traveling through the atmosphere. The multi-body aerospace apparatus 210 comprises a first aerospace body 212, a second aerospace body 214, an attachment member 216, and a flow separation member 218. The first aerospace body 212 comprises a core body and the second aerospace body 214 comprises one booster rocket. In other embodiments, the first aerospace body 212 and the second aerospace body 214 may comprise varying numbers and types of aerospace bodies. The attachment member 216 attaches the first aerospace body 212 adjacent to the second aerospace body 214 with a gap 220 disposed between the first aerospace body 212 and the second aerospace body 214. The attachment member 216 may be attached to the first aerospace body 212 and to the second aerospace body 214 with any type of attachment mechanism such as fasteners, snap-fits, or other attachment members. The flow separation member 218 is attached to the first aerospace body 212 downstream of the attachment member 216. In this regard, downstream refers to a position that is away from the most forward portion of the multi-body aerospace vehicle 210 as the vehicle flies or travels through the atmosphere in direction 224 shown in Figure 8. In other embodiments in which the attachment member 216 is located towards a back end of the first aerospace body 212, the flow separation member 218 may be attached to the first aerospace body 212 upstream of the attachment member 216.

Figure 8 illustrates a side-view of a portion of the multi-body aerospace apparatus 210 of Figure 7 showing the second aerospace body 214 to better illustrate the flow separation member 218. The flow separation member 218 comprises a curved member extending only partway or partially around a perimeter of the first aerospace body 212. It is noted that the flow separation member 218 is larger in length than the attachment member 216 and covers the entire length of the attachment member 216 to assure steady uniform and steady airflow 230 over the entire attachment member 216. Since the attachment member 216 only extends partway around the perimeter of the first aerospace body 212, the flow separation member 218 only needs to extend partway around the perimeter of the first aerospace body 212 at the location of the attachment member 216 to create the uniform and steady airflow 230. The flow separation member 218 may be made of metal or varying materials. The flow separation member 218 may be attached to the first aerospace body 212 with any type of attachment mechanism such as fasteners, snap-fits, or other attachment members. In another embodiment, the flow separation member 218 may be attached to the second aerospace body 214 and only extend partway around the perimeter of the second aerospace body 214 at the location of the attachment member 216 to create the uniform and steady airflow 230.

The flow separation member 218 is disposed apart by a distance 219 from the attachment member 216. The flow separation member 218 extends in a direction away from the first aerospace body 112 and partway into the gap 220. In other embodiments, the flow separation member 218 may comprise varying materials, shapes, sizes, and configurations. As the multi-body aerospace apparatus 210 travels in direction 224, air 226 traveling downstream first comes in contact with the attachment member 216 and then comes in contact with the flow separation member 218. The flow separation member 218 lifts the air 226 in direction 228 off the first aerospace body 212 into the gap 220 between the first aerospace body 212 and the second aerospace body 214. This lifting of the air 226 in direction 228, due to the flow separation member 218, off the first aerospace body 212 toward the second aerospace body 214 and into the gap 220 produces a relatively more uniform and steady airflow 230 between the first aerospace body 212 and the second aerospace body 214 when compared to the multi-aerospace apparatus without the flow separation member 218. In another embodiment, the flow separation member 218 may be disposed against the attachment member 216. In yet another embodiment, the flow separation member 218 may comprise an integral portion of the attachment member 216.

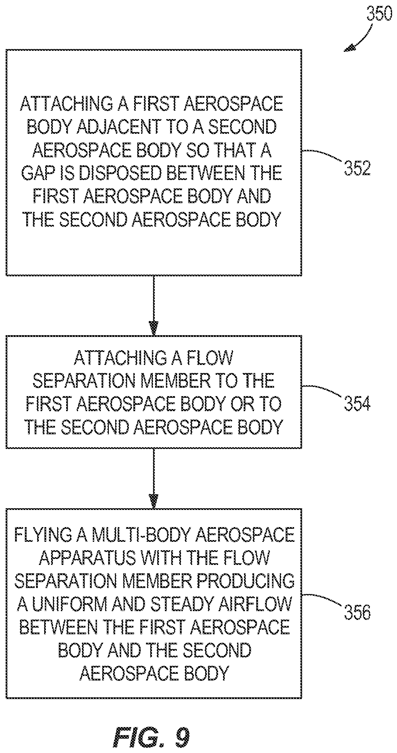

Figure 9 is a flowchart illustrating a method 350 of using a multi-body aerospace apparatus. The method 350 may utilize any of the multi-body aerospace apparatus disclosed herein. In step 352, a first aerospace body is attached adjacent to a second aerospace body so that a gap is disposed between the first aerospace body and the second aerospace body. Step 352 may further comprise attaching the first aerospace body adjacent to the second aerospace body with an attachment member so that the gap is disposed between the first aerospace body and the second aerospace body. The first aerospace body comprises a core body and the second aerospace body comprises one or more rocket boosters. The first aerospace body and the second aerospace body may vary.

In step 354, a flow separation member is attached to the first aerospace body or to the second aerospace body. The attachment member and the flow separation member may be separate parts. The flow separation member may comprise an integral portion of the attachment member and steps 352 and 354 may comprise one step. The flow separation member may comprise a ring. The flow separation member may vary. Step 354 may further comprise disposing the flow separation member apart from the attachment member. Step 354 may further comprise disposing the flow separation member against the attachment member. Step 354 may further comprise the flow separation member extending partway into the gap. Step 354 may further comprise the flow separation member extending partway around a perimeter of the first aerospace body or the second aerospace body. Step 354 may comprise disposing the flow separation member downstream from the attachment member. Step 354 may comprise disposing the flow separation member upstream from the attachment member. In step 356, the multi-body aerospace apparatus is flown with the flow separation member producing a uniform and steady airflow between the first aerospace body and the second aerospace body. Any of the steps of the method 350 may be varied in substance or in order, one or more of the steps may not be followed, or one or more additional steps may be added.

The Abstract is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together for the purpose of streamlining the disclosure. This method of disclosure is not to be interpreted as reflecting an intention that the claimed embodiments require more features than are expressly recited in each claim.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the true scope of the subject matter described herein. Furthermore, it is to be understood that the disclosure is defined by the appended claims. Accordingly, the disclosure is not to be restricted except in light of the appended claims.

## Claims

1. A multi-body aerospace apparatus (10; 210) comprising:
a first aerospace body (12; 212);
at least two second aerospace bodies (14; 214); wherein, for each second aerospace body, the multi-body aerospace apparatus comprises
an attachment member (16; 216) attaching the second aerospace body (14; 214) adjacent to the first aerospace body (12; 212) with a gap (20; 220) disposed between the first aerospace body (12; 212) and the second aerospace body (14; 214);
**characterised in that**, for each second aerospace body, the multi-body aerospace apparatus further comprises:
a flow separation member (18; 218) attached to the first aerospace body (12; 212) and extending in a direction away from the first aerospace body and partway into the gap,
wherein the flow separation member comprises a curved member extending partway around a perimeter of the first aerospace body; is larger in length than the attachment member and covers the entire length of the attachment member.

2. The multi-body aerospace apparatus (10; 210) of claim 1 wherein the flow separation member (18; 218) comprises a separate part than the attachment member (16; 216).

3. The multi-body aerospace apparatus (10; 210) of any preceding claim wherein the flow separation member (18; 218) is disposed apart from the attachment member (16; 216).

4. The multi-body aerospace apparatus (10; 210) of claims 1 or 2 wherein the flow separation member (18; 218) is disposed against the attachment member (16; 216).

5. The multi-body aerospace apparatus (10; 210) of claim 1 wherein the flow separation member (18; 218) comprises an integral portion of the attachment member (16; 216).

6. The multi-body aerospace apparatus of claim 1 wherein the first aerospace body (12; 212) comprises a core body and the second aerospace body (14; 214) comprises a rocket booster.

7. A method of using a multi-body aerospace apparatus (10; 210) comprising:
attaching at least two second aerospace bodies (14; 214) adjacent to a first aerospace body (12; 212) each with an attachment member (16; 216) so that a gap is disposed between the first aerospace body (12; 212) and the second aerospace bodies (14; 214);
**characterised in that**, for each second aerospace body, the method further comprises:
attaching a flow separation member (18; 218) to the first aerospace body (12; 212) extending in a direction away from the first aerospace body and partway into the gap,
wherein the flow separation member comprises a curved member extending partway around a perimeter of the first aerospace body; is larger in length than the attachment member and covers the entire length of the attachment member.

8. The method of claim 7 further comprising flying the multi-body aerospace apparatus with the flow separation member producing a uniform and steady airflow between the first aerospace body and the second aerospace bodies.

9. The method of claim 7 wherein the flow separation member (18; 218) comprises a separate part than the attachment member (16; 216).

10. The method of claim 9 wherein the attaching the flow separation member (18; 218) to the first aerospace body (12; 212) further comprises disposing the flow separation member (18; 218) apart from the attachment member (16; 216).

11. The method of claim 9 wherein the attaching the flow separation member (18; 218) to the first aerospace body (12; 212) further comprises disposing the flow separation member (18; 218) against the attachment member (16; 216).

## Patentansprüche

1. Mehrkörper-Raumfahrvorrichtung (10; 210) aufweisend:
einen ersten Raumfahrkörper (12; 212);
mindestens zwei zweite Raumfahrkörper (14; 214); wobei für jeden der zweiten Raumfahrkörper die Mehrkörper-Raumfahrvorrichtung aufweist:
ein Anbringungselement (16; 216), das den zweiten Raumfahrkörper (14; 214) benachbart zu dem ersten Raumfahrkörper (12; 212) anbringt, so dass ein Spalt (20; 220) zwischen dem ersten Raumfahrkörper (12; 212) und dem zweiten Raumfahrkörper (14; 214) angeordnet ist;
**dadurch gekennzeichnet, dass** für jeden der zweiten Raumfahrkörper die Mehrkörper-Raumfahrvorrichtung ferner aufweist:
ein Strömungsseparationselement (18; 218), das an dem ersten Raumfahrkörper (12; 212) angebracht ist und sich in einer Richtung weg von dem ersten Raumfahrkörper und teilweise in den Spalt hinein erstreckt,
wobei das Strömungsseparationselement ein gekrümmtes Element aufweist, das sich teilweise um einen Umfang des ersten Raumfahrkörpers erstreckt; eine größere Länge als das Anbringungselement hat und die gesamte Länge des Anbringungselements bedeckt.

2. Mehrkörper-Raumfahrvorrichtung (10; 210) nach Anspruch 1, wobei das Strömungsseparationselement (18; 218) einen von dem Anbringungselement (16; 216) separaten Teil aufweist.

3. Mehrkörper-Raumfahrvorrichtung (10; 210) nach einem der vorstehenden Ansprüche, wobei das Strömungsseparationselement (18; 218) beabstandet von dem Anbringungselement (16; 216) angeordnet ist.

4. Mehrkörper-Raumfahrvorrichtung (10; 210) nach Anspruch 1 oder 2, wobei das Strömungsseparationselement (18; 218) anliegend an dem Anbringungselement (16; 216) angeordnet ist.

5. Mehrkörper-Raumfahrvorrichtung (10; 210) nach Anspruch 1, wobei das Strömungsseparationselement (18; 218) einen integralen Teil des Anbringungselements (16; 216) aufweist.

6. Mehrkörper-Raumfahrvorrichtung nach Anspruch 1, wobei der erste Raumfahrkörper (12; 212) einen Kernkörper aufweist und der zweite Raumfahrkörper (14; 214) einen Raketen-Booster aufweist.

7. Verfahren zur Verwendung einer Mehrkörper-Raumfahrvorrichtung (10; 210) aufweisend:
Anbringen von mindestens zwei zweiten Raumfahrkörpern (14; 214) benachbart zu einem ersten Raumfahrkörper (12; 212) jeweils mit einem Anbringungselement (16; 216), so dass ein Spalt zwischen dem ersten Raumfahrkörper (12; 212) und den zweiten Raumfahrkörpern (14; 214) angeordnet ist;
**dadurch gekennzeichnet, dass** für jeden der zweiten Raumfahrkörper das Verfahren ferner aufweist:
Anbringen eines Strömungsseparationselements (18; 218) an dem ersten Raumfahrkörper (12; 212), das sich in einer Richtung weg von dem ersten Raumfahrkörper und teilweise in den Spalt hinein erstreckt,
wobei das Strömungsseparationselement ein gekrümmtes Element aufweist, das sich teilweise um einen Umfang des ersten Raumfahrkörpers erstreckt; eine größere Länge als das Anbringungselement hat und die gesamte Länge des Anbringungselements bedeckt.

8. Verfahren nach Anspruch 7, ferner aufweisend Fliegen der Mehrkörper-Raumfahrvorrichtung mit dem Strömungsseparationselement, das einen gleichförmigen und gleichbleibenden Luftstrom zwischen dem ersten Raumfahrkörper und den zweiten Raumfahrkörpern erzeugt.

9. Verfahren nach Anspruch 7, wobei das Strömungsseparationselement (18; 218) einen von dem Anbringungselement (16; 216) separaten Teil aufweist.

10. Verfahren nach Anspruch 9, wobei das Anbringen des Strömungsseparationselements (18; 218) an dem ersten Raumfahrkörper (12; 212) ferner aufweist: Anordnen des Strömungsseparationselements (18; 218) beabstandet von dem Anbringungselement (16; 216).

11. Verfahren nach Anspruch 9, wobei das Anbringen des Strömungsseparationselements (18; 218) an dem ersten Raumfahrkörper (12; 212) ferner aufweist: Anordnen des Strömungsseparationselements (18; 218) anliegend an dem Anbringungselement (16; 216).

## Revendications

1. Appareil aérospatial multi-corps (10 ; 210) comprenant :
un premier corps aérospatial (12 ; 212) ;
au moins deux seconds corps aérospatiaux (14 ; 214) ; dans lequel, pour chaque second corps aérospatial, l'appareil aérospatial multi-corps comprend un élément d'attache (16 ; 216) attachant le second corps aérospatial (14 ; 214) adjacent au premier corps aérospatial (12 ; 212) avec un interstice (20 ; 220) disposé entre le premier corps aérospatial (12 ; 212) et le second corps aérospatial (14 ; 214) ;
**caractérisé en ce que**, pour chaque second corps aérospatial, l'appareil aérospatial à plusieurs corps comprend en outre :
un élément de décollement de l'écoulement (18 ; 218) attaché au premier corps aérospatial (12 ; 212) et s'étendant en s'éloignant du premier corps aérospatial et partiellement dans l'interstice,
dans lequel l'élément de décollement de l'écoulement comprend un élément incurvé s'étendant partiellement autour d'un périmètre du premier corps aérospatial ; est plus grand en longueur que l'élément d'attache et couvre la longueur tout entière de l'élément d'attache.

2. Appareil aérospatial multi-corps (10 ; 210) selon la revendication 1 dans lequel l'élément de décollement de l'écoulement (18 ; 218) comprend une partie distincte de l'élément d'attache (16 ; 216).

3. Appareil aérospatial multi-corps (10 ; 210) selon une quelconque revendication précédente dans lequel l'élément de décollement de l'écoulement (18 ; 218) est disposé à l'écart de l'élément d'attache (16 ; 216).

4. Appareil aérospatial multi-corps (10 ; 210) selon l'une des revendications 1 ou 2 dans lequel l'élément de décollement de l'écoulement (18 ; 218) est disposé contre l'élément d'attache (16 ; 216).

5. Appareil aérospatial multi-corps (10 ; 210) selon la revendication 1 dans lequel l'élément de décollement de l'écoulement (18 ; 218) comprend une portion intégrée de l'élément d'attache (16 ; 216).

6. Appareil aérospatial multi-corps selon la revendication 1 dans lequel le premier corps aérospatial (12 ; 212) comprend un corps principal et le second corps aérospatial (14 ; 214) comprend un propulseur de fusée.

7. Procédé d'utilisation d'un appareil aérospatial multicorps (10 ; 210) comprenant :
l'attache d'au moins deux seconds corps aérospatiaux (14 ; 214) adjacents à un premier corps aérospatial (12 ; 212) chacun avec un élément d'attache (16 ; 216) de façon à ce qu'un interstice soit disposé entre le premier corps aérospatial (12 ; 212) et les seconds corps aérospatiaux (14 ; 214) ;
**caractérisé en ce que**, pour chaque second corps aérospatial, le procédé comprend en outre :
l'attache d'un élément de décollement de l'écoulement (18 ; 218) au premier corps aérospatial (12 ; 212) s'étendant en s'éloignant du premier corps aérospatial et partiellement dans l'interstice,
dans lequel l'élément de décollement de l'écoulement comprend un élément incurvé s'étendant à mi-chemin autour d'un périmètre du premier corps aérospatial ; est plus grand en longueur que l'élément d'attache et couvre la longueur tout entière de l'élément d'attache.

8. Procédé selon la revendication 7 comprenant en outre le fait de faire voler l'appareil aérospatial multi-corps avec l'élément de décollement de l'écoulement produisant un écoulement d'air uniforme et régulier entre le premier corps aérospatial et les seconds corps aérospatiaux.

9. Procédé selon la revendication 7 dans lequel l'élément de décollement de l'écoulement (18 ; 218) comprend une partie distincte de l'élément d'attache (16 ; 216).

10. Procédé selon la revendication 9 dans lequel l'attache de l'élément de décollement de l'écoulement (18 ; 218) au premier corps aérospatial (12 ; 212) comprend en outre la disposition de l'élément de décollement de l'écoulement (18 ; 218) à part de l'élément d'attache (16 ; 216).

11. Procédé selon la revendication 9 dans lequel l'attache de l'élément de décollement de l'écoulement (18 ; 218) au premier corps aérospatial (12 ; 212) comprend en outre la disposition de l'élément de décollement de l'écoulement (18 ; 218) contre l'élément d'attache (16 ; 216).
